# EUROPÄISCHE PATENTSCHRIFT

(11) **EP 3 701 147 B1**
(45) Veröffentlichungstag und Bekanntmachung des Hinweises auf die Patenterteilung: **28.07.2021**
(21) Anmeldenummer: 18773941.2
(22) Anmeldetag: 05.09.2018
(51) Int. Cl.: F04B 35/04, F04B 39/00, F04B 39/12, B60T 17/02, H02K 7/08, H02K 7/14, F04B 39/16, H02K 1/27

(54) **VERDICHTERANORDNUNG ZUM BETREIBEN EINER DRUCKLUFTVERSORGUNGSANLAGE, DRUCKLUFTVERSORGUNGSANLAGE, FAHRZEUG**
COMPRESSOR ASSEMBLY FOR OPERATING A COMPRESSED AIR SUPPLY SYSTEM, COMPRESSED AIR SUPPLY SYSTEM, AND VEHICLE
ENSEMBLE COMPRESSEUR SERVANT À FAIRE FONCTIONNER UNE INSTALLATION D'ALIMENTATION EN AIR COMPRIMÉ, INSTALLATION D'ALIMENTATION EN AIR COMPRIMÉ, VÉHICULE

(30) Priorität: 23.10.2017 DE 102017009842
(43) Veröffentlichungstag der Anmeldung: 02.09.2020
(73) Patentinhaber: ZF CV Systems Hannover GmbH, 30453 Hannover (DE)
(72) Erfinder: KIRCHHOFF, Dirk, 31028 Gronau/Leine (DE); MEISSNER, Frank, 30453 Hannover (DE); NUSS, Eduard, 31028 Gronau (DE); SEEGER, Marco, 30855 Langenhagen (DE)
(74) Vertreter: Rabe, Dirk-Heinrich
(86) Internationale Anmeldenummer: PCT/EP2018/073809
(87) Internationale Veröffentlichungsnummer: WO 2019/081106

(56) Entgegenhaltungen:
- CN-A- 103 944 311
- DE-A1-102013 003 513
- DE-A1-102013 100 015
- JP-A- H0 378 163
- US-A- 4 259 603
- US-A- 4 417 167
- US-A- 5 394 283
- US-A1- 2006 290 223

## Beschreibung

Die Erfindung betrifft eine Verdichteranordnung gemäß dem Oberbegriff des Anspruchs 1.

Eine solche Verdichteranordnung zum Betreiben einer Druckluftversorgungsanlage, weist auf: einen Elektromotor, der innerhalb eines Antriebsgehäuses angeordnet ist und einen innenliegenden Stator und einen außenliegenden Außenläufer-Rotor aufweist, wobei der Außenläufer-Rotor um den innenliegenden Stator rotierbar angeordnet ist, und einen pneumatischen Kompressor. Luftversorgungsanlagen, insbesondere Druckluftversorgungsanlagen, für Luftfederungen, Niveauregelungen oder andere Anwendungen sind allgemein bekannt. Solche Luftversorgungsanlagen erzeugen verdichtete Luft, um damit Druckluftverbraucher wie die beispielsweise genannte Luftfederung zu versorgen. Die Druckluft wird mittels eines Kompressors erzeugt, welcher insbesondere über einen Elektromotor angetrieben wird.

WO 2009/033556 A1 offenbart einen kompakten trockenlaufenden Kolbenkompressor mit mindestens einem Zylinder zur Kompression von Luft mittels eines zugeordneten Kolbens, der per Elektromotor von einem aus Kurbelwelle und Pleuel bestehenden Kurbeltrieb bewegbar ist, welcher in einem ölbadfreien Kompressorgehäuse über dauergeschmierte Wälzlager drehbar gelagert ist und infolge des Bewegungszyklus einen gehäuseinternen Kühlluftstrom erzeugt, wobei das Kompressorgehäuse zwei über eine Trennwand getrennte Gehäusehälften umfasst, um innerhalb der ersten Gehäusehälfte den Kurbeltrieb unterzubringen und innerhalb der zweiten Gehäusehälfte der Elektromotor unterzubringen, wobei in die Trennwand ein dem Kurbeltrieb sowie dem Elektromotor gemeinsames Wälzlager eingesetzt ist, welches in dem die erste Gehäusehälfte passierenden Kühlluftstrom liegt.

DE 10 2013 003 513 A1 offenbart eine eingangs genannte Verdichteranordnung zum Betreiben einer Druckluftversorgungsanlage eines Fahrzeugs, aufweisend einen Verdichter mit einem Elektromotor, der als ein elektronisch kommutierter, bürstenloser Gleichstrom-Motor mit einer Ansteuerschaltung umfassend eine Leistungselektronik (BL-DC Motor) gebildet ist und einem pneumatischen Kompressor. Weiterhin ist vorgesehen, dass der Elektromotor in Form eines Außenläufer-Motors gebildet ist.

Die JPH0378163A offenbart einen elektrischen Motor wohei ein Magnet mit einer elektromagnetischen Kraft zwischen einem Stator und dem Magneten betätigt wird, indem die Spule eines Statorteils erregt wird, und der Magnet, die Spindelnabe und jede Scheibe drehbar einstückig angetrieben werden. Die Spindelnabe wird an beiden Endteilen jeweils direkt mit den Lagern mit großem Durchmesser abgestützt. Dadurch kann die Steifigkeit verbessert werden, und die stabile Drehung kann erhalten werden.

Die US5394283A offenbart ein Plattenspeicherlaufwerk mit einem Stator und einem Rotor, der mit einer zentrierten Nabe ausgestattet ist, wobei diese Nabe eine Oberfläche aufweist, auf der eine oder mehrere Festplatten montiert werden können. Das Lagersystem zwischen Rotor und Stator besteht aus zwei Kugellagern. Das erste Kugellager ist in einem ersten Abstand von einer Rotationsachse zwischen Rotor und Stator montiert, und das zweite Kugellager ist in einem zweiten Abstand von der Rotationsachse zwischen Rotor und Stator montiert, wobei der zweite Abstand größer als der erste ist Entfernung.

Diese grundsätzlich vorteilhaften Ansätze, insbesondere eines bürstenlosen Gleichstrommotors und des im letztgenannten Ansatz verwendeten Außenläufer-Motors, sind weiterhin verbesserungswürdig.

Wünschenswert ist es daher, die Funktion einer Druckluftversorgungsanlage insbesondere hinsichtlich Kompaktheit, Lebensdauer, Geräuschentwicklung, Montage- und Wartungsfreundlichkeit sowie Effizienz zu verbessern.

An dieser Stelle setzt die Erfindung an, deren Aufgabe es ist, in verbesserter Weise eine Druckluftversorgungsanlage anzugeben, welche diese Ziele teilweise oder vollständig erreicht, insbesondere den Bauraum und das Gewicht einer Verdichteranordnung, insbesondere eines Antriebs für einen Verdichter, reduziert und die Betriebseigenschaften eines Verdichters verbessert.

Die Aufgabe wird gelöst durch die Erfindung mit einer Verdichteranordnung das Anspruchs 1.

Eine solche Verdichteranordnung zum Betreiben einer Druckluftversorgungsanlage, weist auf: einen Elektromotor, der innerhalb eines Antriebsgehäuses angeordnet ist und einen innenliegenden Stator und einen außenliegenden Außenläufer-Rotor aufweist, wobei der Außenläufer-Rotor um den innenliegenden Stator rotierbar angeordnet ist, und einen pneumatischen Kompressor.

Basierend auf dieser Verdichteranordnung der eingangs genannten Art ist vorgesehen, dass der Außenläufer-Rotor über eine Lageranordnung, die mindestens ein Lager aufweist, um eine Mittenachse rotierbar in Bezug auf das Antriebsgehäuse gelagert ist, und der Außenläufer-Rotor, insbesondere ausschließlich, durch die Lageranordnung am Außenumfang des Außenläufer-Rotors gelagert ist.

Die Erfindung führt zur Lösung der Aufgabe auch auf eine Druckluftversorgungsanlage des Anspruchs 17 und ein Fahrzeug des Anspruchs 18.

Die Erfindung geht von der Überlegung aus, dass ein Außenläufer-Motor als Antriebsmotor für einen Verdichter generell zu Vorteilen führt. Zu diesen Vorteilen zählen insbesondere die zusätzliche Eigenschaft des Außenläufer-Rotors als Schwungrad zum Speichern von Energie sowie das in Verbindung mit einem bürstenlosen Gleichstrommotor erreichbare Trägheitsmoment und die damit höheren erreichbaren dynamischen Anforderungen. Auch lässt sich mittels konstruktiver Auslegung des Elektromotors in Form eines Außenläufer-Motors eine erhebliche Reduzierung des Einbauraums und somit des Platz- und Gewichtsbedarfs der gesamten Druckluftversorgungsanlage erreichen.

Die Erfindung hat erkannt, dass eine Lagerung des Außenläufer-Rotors, insbesondere des Außenläufers, am Außenumfang zu Vorteilen führt. Zu diesen Vorteilen zählt die zusätzliche Abschirmung von elektromagnetischer Strahlung durch das außerhalb der Rotorglocke liegende Lager. Vom Elektromotor ausgehende Strahlung wird so in verbesserter Weise abgeschirmt und die elektromagnetische Verträglichkeit der Verdichteranordnung in positiver Weise erhöht.

Weiterhin kann durch die Lagerung am Außenumfang des Außenläufer-Rotors vorteilhaft erreicht werden, dass der Magnetfluss im Stator verbessert wird, da im Vergleich zu anderen bekannten Wirkprinzipien keine Öffnung im Stator zur Durchführung der Motorwelle benötigt wird.

Weiterhin wird durch die geringere Ausbreitung der Rotorglocke in axialer Richtung aufgrund der entfallenden Lagerung an den Enden der Rotorglocke, der Wirkdurchmesser der Rotorglocke aufgrund von äußeren Kräften, insbesondere Pleuelkräften, in geringerem Maße beeinflusst. Daher kann der Luftspalt des Motors durch konstruktive Auslegung in vorteilhafter Weise verkleinert werden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere ist vorgesehen, dass der Außenläufer-Rotor ein Schwungmassengewicht aufweist. Konkret bedeutet dies, dass am Umfang des Außenläufer-Rotors bzw. Läufers zusätzlich zu der Eigenmasse des Außenläufer-Rotors, insbesondere der Rotorglocke, massebehaftete Elemente, insbesondere gleichmäßig über den Umfang angeordnet, oder als ein einstückiges, sich gleichmäßig über den Umfang erstreckendes massebehaftetes Element angeordnet sind. Dies führt zu dem Vorteil, dass Energie, die vom Antrieb bzw. Elektromotor durch die rotierende Bewegung erzeugt wurde, in Form von kinetischer Energie gespeichert werden kann. Durch das auf diese Weise erhöhte Trägheitsmoment des Außenläufer-Rotors können insbesondere bürstenlose Gleichstrommotoren die dynamischen Anforderungen, welche bei der Drucklufterzeugung im automotiven Bereich bestehen, in verbesserter Weise erfüllen.

Vorteilhaft ist vorgesehen, dass der Außenläufer-Rotor einen praktisch zylindrischen, um eine Exzenterache E angeordneten Exzenterzapfen aufweist, wobei die Exzenterachse E parallel, jedoch in einem Hubabstand H zur Mittenachse M angeordnet ist, insbesondere der Exzenterzapfen in Form einer Anformung an einen Rotorstirnabschnitt zur Aufnahme eines Pleuels über ein Pleuellager gebildet ist. Konkret bedeutet dies, dass der Exzenterzapfen, der zur rotierbaren Verbindung des Außenläufer-Rotors mit dem Pleuel dient, direkt am Außenläufer-Rotor, insbesondere am Rotorstirnabschnitt, angeordnet ist. Auf diese Weise wird durch diese Weiterbildung eine noch kompaktere Bauform der Verdichteranordnung erreicht, insbesondere weil eine Übertragung der Antriebsenergie vom Motor auf das Pleuel ohne einen zusätzlich auf einer Antriebswelle angeordneten Hubzapfen oder dergleichen erfolgt.

Im Rahmen einer bevorzugten Weiterbildung ist vorgesehen, dass das Antriebsgehäuse einen Antriebsgehäuserumpf und einen Antriebsgehäusedeckel aufweist, wobei der Stator am Antriebsgehäusedeckel gehalten ist, und der Außenläufer-Rotor an einer Innenseite einer Gehäusewand des Antriebsgehäuserumpfes gelagert ist. Konkret kann dies insbesondere bedeuten, dass der Stator am Antriebsgehäusedeckel angeordnet ist und somit die Montage des Elektromotors praktisch über das Einsetzen des Antriebsgehäusedeckels in das Antriebsgehäuse erfolgt. Durch diese Weiterbildung wird in vorteilhafter Weise ein weiterer Beitrag zur Kompaktheit erzielt, da auf weitere, gehäuseseitige Befestigungselemente verzichtet werden kann. Weiterhin wird die Zugänglichkeit zum Antrieb und somit die Wartungsfreundlichkeit verbessert, da der Stator bereits durch das Entfernen des Deckels demontiert wird. Auch kann durch einen definierten, vorbestimmen Abstand des Stators zum Außenläufer-Rotor in axialer Richtung eine gewünschte Vorspannung des Lagers erreicht werden, welche sich durch die zwischen Stator und Außenläufer-Rotor des Elektromotors wirkenden magnetischen Kräfte ergibt. Durch die Wahl dieses Abstands kann, ja nach Betriebsanforderungen, eine positive, negative oder neutrale Vorspannung erreicht werden.

Vorteilhaft ist vorgesehen, dass der Antriebsgehäuserumpf ein Motorgehäuse und ein Kurbelgehäuse des Kompressors einstückig ausbildet. Konkret bedeutet dies, dass sich Antrieb und Kurbeltrieb in einem gemeinsamen, vom Antriebsgehäuse umschlossenen, Raum befinden. Dies wird insbesondere ermöglicht durch die gemäß dem Konzept der Erfindung vorgesehene Lagerung des Außenläufer-Rotors am Außenumfang, und der damit verbundenen entfallenden Lagerung einer Motorwelle, welche eine Zwischenwand zur Aufnahme eines kurbeltriebseitigen Motorwellenlagers erfordern würde. Durch diese Weiterbildung wird die Kompaktheit der Verdichteranordnung vorteilhaft weiter erhöht.

Insbesondere ist vorgesehen, dass der Antriebsgehäusedeckel stirnseitig abschließend auf einer Stirnöffnung des Antriebsgehäuserumpfes aufsitzt. Konkret bedeutet dies, dass der Antriebsgehäusedeckel, ähnlich einer Topf-Deckel-Verbindung, zur Montage passend auf eine Fläche des Antriebsgehäuserumpfes gesetzt und befestigt werden kann. Insbesondere können der Antriebsgehäusedeckel und der Antriebsgehäuserumpf durch zueinander abgestimmte Passflächen in axialer und radialer Richtung selbstzentrierend zur Bildung einer gemeinsamen Stator- und Rotorachse ausgebildet sein. Dies bedeutet, dass sich bei der Montage des Antriebsgehäusedeckels aufgrund des Kontaktes der korrespondierenden Passflächen zueinander der Antriebsgehäusedeckel zum Antriebsgehäuserumpf, und somit insbesondere der Stator zum Außenläufer-Rotor, ausrichtet. Durch eine derartige Weiterbildung kann in vorteilhafter Weise die Montage- und Wartungsfreundlichkeit des Antriebs der Verdichteranordnung verbessert werden, da die eine Ausrichtung von Stator zum Außenläufer-Rotor nicht mehr durch entsprechende Befestigungselemente oder Justageschritte bei der Montage vorgesehen werden muss.

Im Rahmen einer bevorzugten Weiterbildung ist vorgesehen, dass der Stator derartig angeordnet ist, dass die Symmetrieachse des Stators koaxial mit der Mittenachse ausgerichtet ist, insbesondere die Symmetrieachse des Stators auf der Mittenachse liegt.

Dies kann insbesondere konkret beinhalten, dass bedingt durch die gemäß dem Konzept der Erfindung erfolgende Lagerung des Außenläufer-Rotors am Außenumfang der Rotorglocke eine Antriebswelle, wie sie in konventionellen Verdichterantrieben eingesetzt wird, entfallen kann. Durch das Konzept der Erfindung ist eine Ausbildung des Außenläufer-Rotors als selbsttragende, das heißt Antriebskräfte bzw. -momente direkt und ohne Antriebswelle übertragende Einheit, vorgesehen. So ist es vorteilhaft möglich, dass der die Mittenachse umgebende Bereich des Stators materialfüllend ausgebildet ist, insbesondere ohne Öffnung für eine Rotorwelle. So kann der Bereich um die Rotationsachse des Außenläufer-Rotors, der normalerweise für eine Öffnung zur Durchführung einer Motorwelle vorgesehen wäre, materialfüllend ausgebildet sein. So wird in vorteilhafter Weise der magnetische Fluss im Stator verbessert. Weiterhin ist es gleichwohl möglich, dass das Blechpaket des Stators zumindest teilweise nicht materialfüllend, und damit zumindest teilweise hohl ausgebildet ist. Dies kann beispielsweise vorteilhaft sein, um Gewichtseinsparungen zu erreichen. Insbesondere kann eine Führung einer Welle durch den Bereich innerhalb des von den Wicklungen umschlossenen Bereichs vermieden werden. Dadurch ergeben sich Vorteile hinsichtlich des magnetischen Flusses, der dann mit weniger Verlusten und ohne Wirbelfelder in einer Welle geführt werden kann.

Vorteilhaft ist vorgesehen, dass die Lageranordnung ein innenringloses Lager oder ein außenringloses Lager aufweist. Ein innenringloses Lager bedeutet, dass das Lager keinen Innenring aufweist. Insbesondere übernimmt der Außenläufer-Rotor des Elektromotors, insbesondere die Rotorglocke, die Funktion des Innenlagerrings, mindestens eines Lagers der Lageranordnung. Dies beinhaltet, dass der Außenläufer-Rotor, ohne einen aufgesetzten Lagerinnenring, in direktem Kontakt mit den Wälzkörpern, bzw. bei einem Gleitlager in direktem Kontakt mit dem Lageraußenring, steht. Analog bedeutet ein außenringloses Lager, dass das Lager keinen Außenring aufweist. Insbesondere übernehmen Teile der Innenseite der Gehäusewand, die eine Lauffläche für die Wälzkörper bilden, die Funktion des Lageraußenrings mindestens eines Lagers der Lageranordnung.

Insbesondere können in beiden Weiterbildungen die Oberflächen, welche die Funktion der jeweiligen Lagerringe übernehmen, derart beschaffen sein, dass sie beispielsweise durch geeignete Bearbeitung Oberflächen- und Formeigenschaften aufweisen, welche den Außenläufer-Rotor zum Einsatz als Lagerinnenring bzw. Lageraußenring qualifizieren. Eine solche Bearbeitung kann insbesondere Vorbehandlungsschritte aufweisen zum Einstellen, insbesondere zum Erhöhen, von Härte- und Festigkeitsparametern der mit den Wälzkörpern in Kontakt stehenden Oberfläche, insbesondere der Außenoberfläche der Rotorglocke oder der Innenseite der Gehäusewand, insbesondere um einen geräusch- und verschleißarmen Betrieb des Antriebs zu bewirken.

Insbesondere ist vorgesehen, dass der Elektromotor als elektronisch kommutierter, bürstenloser Gleichstrom-Motor mit einer Ansteuerschaltung umfassend eine Leistungselektronik gebildet ist. Konkret bedeutet dies, dass Elektromotor entsprechend dieser beiden Bauformen, abhängig von konstruktiven Anforderungen, ausgebildet sein kann. Zu diesen Anforderungen zählen insbesondere der Preis, dynamische Eigenschaften im Betrieb wie Beschleunigung, Drehmoment, Drehzahl sowie weiterhin elektromagnetische Verträglichkeit, Lebensdauer und Wartungsfreiheit.

Im Rahmen einer bevorzugten Weiterbildung ist vorgesehen, dass das Lager ausgewählt ist aus einer Gruppe von Lagern bestehend aus: Gleitlager, Nadellager, Kugellager, Tonnenlager und Zylinderrollenlager. Konkret bedeutet dies, dass eine Lagerform in Abhängigkeit der konstruktiven Anforderungen gewählt wird. Nadel- und Zylinderrollenlager und allgemein Wälzlager mit zylindrischen Wälzkörpern haben aufgrund des Linienkontaktes mit der Lauffläche eine generell hohe radiale Tragfähigkeit. Bei einem Nadellager kommt hinzu, dass es aufgrund der geringen Wälzkörperdurchmesser relativ kompakt ist, und somit in vorteilhafter Weise den Einbauraum des Antriebs weiter verkleinert. Kugellager weisen aufgrund der Schmiegung in den Wälzkontakten eine relativ hohe axiale und radiale Tragfähigkeit auf. Tonnenlager ermöglichen weiterhin, aufgrund der balligen Ausführung der Wälzkörper und einer hohlkugeligen Außenringlaufbahn, eine gewisse Pendelbewegung zwischen Innen- und Außenring. Somit wird eine Unempfindlichkeit gegen Schiefstellung und Fluchtfehler des Rotors gegenüber dem Stator erreicht.

Vorteilhaft ist vorgesehen, dass die Lageranordnung mindestens ein einreihiges Lager oder mindestens ein mehrreihiges Lager aufweist. Dies kann konkret beinhalten, dass der Außenläufer-Rotor über ein zweireihiges Rillenkugellager oder zweireihiges Schrägkugellager gebildet ist. Eine mehrreihige Anordnung führt in vorteilhafter Weise zu einer Erhöhung der Tragfähigkeit und ermöglicht, insbesondere beim Schrägkugellager, die Einstellung unterschiedlicher Druckwinkel. Außerdem kann durch die Anordnung der Schräglagerreihen Spielfreiheit, Stützweite, axiale Tragfähigkeit und Axialkraftübertragung beeinflusst werden, um konstruktiven Anforderungen gerecht zu werden.

Insbesondere ist vorgesehen, dass der Außenläufer-Rotor ausgebildet ist, durch über die im Elektromotor wirkenden Magnetkräfte in axialer Richtung fixiert zu werden. Dies beinhaltet konkret, dass über die Lageranordnung keine Kräfte in axialer Richtung, wie beispielsweise bei einer Fest-/ Loslagerung oder einer Stützlagerung, übertragen werden und der Außenläufer-Rotor lediglich über die zwischen Außenläufer-Rotor und Stator wirkenden magnetischen Kräfte in axialer Richtung relativ zum Stator mittig gehalten wird. Diese Weiterbildung führt zu dem Vorteil, dass die Lager in axialer Richtung nicht mechanisch verspannt sind und die Manschette oder der Kolbenring im Verdichter, die/der sonst von den Lagern fixiert wurde, somit in radialer Richtung nicht mehr verspannt werden kann. Die radiale Zentrierung der Manschette oder des Kolbenrings im Zylinder und die axiale Zentrierung des Rotors zum Stator ergänzen sich im Idealfall auf einem niedrigen Kraftniveau. Auf diese Weise wird Verschleiß und Strom beim Betrieb des Motors vorteilhaft reduziert. Weiterhin wirken sich im Kurbeltrieb wirkende Kräfte durch die gemäß dieser Weiterbildung erreichbare axiale Beweglichkeit weniger auf die Verformung des Rotors aus, somit wird eine Wellendurchbiegung, wie sie bei einer konventionellen Lagerung eines Verdichterantriebs auftreten kann, im Wesentlichen vermieden. Durch dieses Vermeiden einer Durchbiegung des Rotors bzw. der Welle wird insbesondere ein kleinerer Luftspalt des Elektromotors und somit entsprechend hohe Kräfte und insbesondere ein hohes Drehmoment des Elektromotors ermöglicht. Auch wird durch eine derartige Weiterbildung die Körperschallübertragung zwischen von Außenläufer-Rotor auf Stator und damit auf das Antriebsgehäuse vermindert, was sich vorteilhaft auf Vibrationen und Schallentwicklung auswirkt. Dies trifft insbesondere auf die Minderung von Körperschall zu, welcher infolge axialer Bewegungen des Motorankers bei einer konventionellen, starren Führung des Rotors einschließlich Kurbelwelle und Pleuel entstehen würde. Weiterhin wird die Gefahr einer Beschädigung von Lager oder Lagerfixierung vermindert, indem in axialer Richtung wirkende, insbesondere ruckartig pulsierende Axialkräfte aus dem Kurbeltrieb, nicht direkt in das Lager und damit in das gesamte Aggregat übertragen werden.

Im Rahmen einer bevorzugten Weiterbildung ist vorgesehen, dass der Außenläufer-Rotor über ein Lager in axialer Richtung fixiert wird. Dies kann konkret beinhalten, dass das Lager zur Lagerung des Rotors am Außenumfang zur Aufnahme von Axialkräften ausgebildet ist. Alternativ oder zusätzlich kann dies bedeuten, dass die die Fixierung in axialer Richtung über ein in einem axialen Abstand zum ersten Lager angeordnetes zweites Lager erfolgt. Dieses Lager kann als ein Axialkräfte aufnehmendes Radiallager, oder als ausschließliches Axiallager ausgebildet sein. Diese Weiterbildung führt zu dem Vorteil, dass der Außenläufer-Rotor in axialer Richtung fixiert ist, insbesondere ohne dass eine Fixierung durch ein Pleuel oder magnetische Kräfte des Elektromotors notwendig sind.

Vorteilhaft ist vorgesehen, dass am Umfang des Rotors, insbesondere am Umfang der Rotorglocke, mindestens ein Gewicht, insbesondere ein Schwungmassengewicht und/oder ein Ausgleichsgewicht zur Kompensation von Unwucht angeordnet ist. Dies beinhaltet konkret, dass am Außenläufer-Rotor mindestens ein Gewicht angeordnet ist, welches entsprechend der tatsächlichen Massenverteilung des Rotors derartig am Außenläufer-Rotor positioniert wird, dass die Summe der auf den drehenden Außenläufer-Rotor durch die Rotation wirkenden Kräfte minimiert wird. Insbesondere betrifft dies Kräfte, welche aufgrund des Exzenterzapfens und daran befestigter Teile in den Außenläufer-Rotor geleitet werden. Auf diese Weise wird vorteilhaft ein vibrations- und geräuscharmer Betrieb des Antriebs und somit des Verdichters erreicht. Insbesondere wird ein vollständiger rotatorischer Massenausgleich erreicht.

Insbesondere ist vorgesehen, dass der Außenläufer-Rotor über zwei Lager rotierbar an dem Antriebsgehäuse gelagert ist, die mit Abstand in axialer Richtung angeordnet sind. Konkret bedeutet dies, dass der Außenläufer-Rotor über zwei, insbesondere an in axialer Richtung gegenüberliegenden Seiten der Rotorglocke angeordnete Lager im Antriebsgehäuse gelagert ist. Auf diese Weise ist vorteilhaft eine Erhöhung der Tragfähigkeit der Lager möglich. Weiterhin kann durch die zweifache Lageranordnung die Stützweite der Lagerung, insbesondere zur verbesserten Aufnahme von Biegemomenten, erhöht werden. Dies trifft weiterhin insbesondere auf den Einsatz von zwei einreihigen, gemäß dieser Weiterbildung angeordneten Schrägkugellager zu.

Im Rahmen einer bevorzugten Weiterbildung ist vorgesehen, dass der Stator in axialer Richtung verstellbar auf dem Antriebsgehäusedeckel angeordnet ist. Diese Verstellbarkeit kann konstruktiv beispielsweise durch ein Einstellgewinde im Stator oder einen in axialer Richtung verstellbaren Antriebsgehäusedeckel erreicht werden. Um letzteres, nämlich eine Verstellbarkeit des Antriebsgehäusedeckels in axialer Richtung, zu erreichen, können Langlöcher im Antriebsgehäuserumpf in axialer Richtung vorgesehen werden. Durch derartige Langlöcher kann der Antriebsgehäusedeckel nach Einstellung der gewünschten axialen Position beispielsweise mittels Schrauben fixiert werden. Weiterhin kann der Antriebsgehäuserumpf derartig ausgebildet sein, dass er mindestens eine spiralförmig umlaufende Nut auf einer zylinderförmigen Innenoberfläche der Öffnung für den Antriebsgehäusedeckel aufweist. Durch entsprechende, sich radial ausbreitende Zapfen auf der Seite des Antriebsgehäusedeckels kann dieser durch Drehen und durch die Führung der Zapfen des Antriebsgehäusedeckels in den Nuten des Antriebsgehäuserumpfes, in axialer Richtung verstellt werden. Nach Erreichen der einzustellenden axialen Position kann der Deckel über Schrauben oder ähnliche Befestigungsmittel fixiert und gegen Verdrehen gesichert werden.

Durch eine Verstellbarkeit des Stators in axialer Richtung wird vorteilhaft eine Anpassbarkeit der axialen Vorspannung des Rotors und insbesondere der Rotorglocke im montierten Zustand erreicht. Auf diese Weise kann ein gewünschtes Betriebsverhalten entsprechend der Vorspannung, insbesondere durch das Einstellen einer positiven, negativen oder neutralen Vorspannung, erreicht werden.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: Konstruktive Realisierung einer Druckluftversorgungsanlage 1000 und in
- Fig. 2A - F: unterschiedliche Ausführungsformen einer Rotorlagerung gemäß dem Konzept der Erfindung
- Fig. 3A - B: detaillierte Ansichten eines Elektromotors gemäß dem Konzept der Erfindung,
- Fig. 4: eine stark vereinfachte, schematische Übersicht einer Druckluftversorgungsanlage,
- Fig. 5: eine schematische Darstellung eines Fahrzeugs mit einer Druckluftversorgungsanlage.

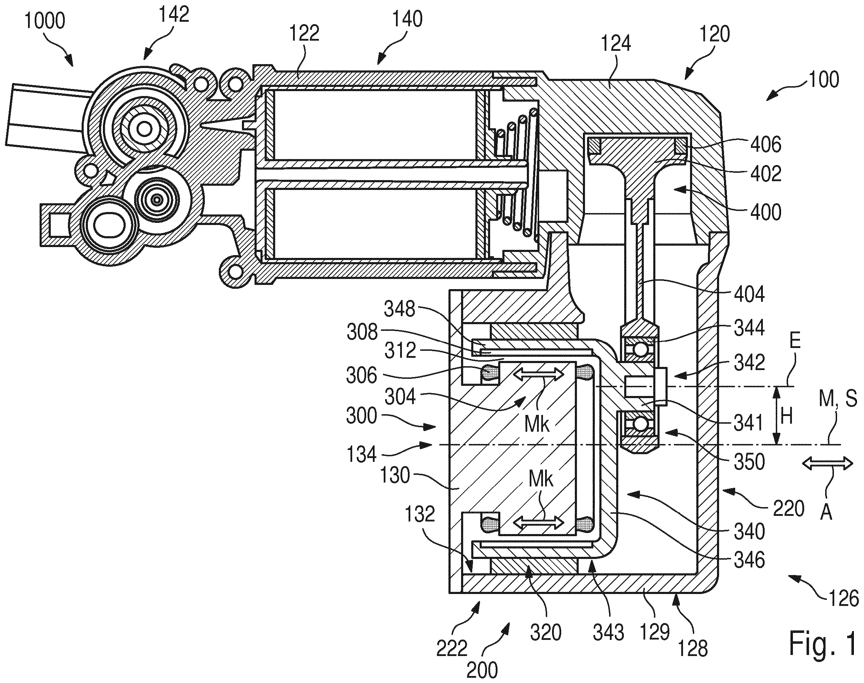

Fig. 1 zeigt im Rahmen einer ersten Variante einer besonders bevorzugten Ausführungsform eine konstruktive Realisierung einer Druckluftversorgungsanlage 1000. Die Druckluftversorgungsanlage 1000 weist ein Gehäuse 120 auf, welches wiederum ein Trockner- und Ventilgehäuse 122, ein Kompressorgehäuse 124 und eine Antriebsgehäuse 126 aufweist.

In der konstruktiven Darstellung der Druckluftversorgungsanlage 1000 der Fig. 1 ist das Gehäuse 120 derselben mit einem Antriebsgehäuse 126 erkennbar zur Ausführung der Verdichteranordnung 100 umfassend den Kompressor 400 und den Antrieb, wobei in dem Antriebsgehäuse 126 der Antrieb in Form eines Elektromotors 300 und der Kurbeltrieb 350 untergebracht ist. Das Antriebsgehäuse kann gleichwohl als Motorgehäuse oder ähnliches Gehäuse ausgebildet sein.

Die Gehäuseanordnung 120 umfasst weiterhin ein Kompressorgehäuse 124 für den Kompressor 400. An dem Kompressorgehäuse 124 schließt ein Trockner- und Ventilgehäuse 122 an, umfassend das Trocknergehäuse und elektrische und/oder elektronische und pneumatische Schnittstellen zusammen mit einer Mechatronik sowie einer Anordnung von Ventilen --im Wesentlichen zur Darstellung der Ventilanordnung 142.

In dem Kompressorgehäuse 124 ist ein hin- und her-bewegbarer Kolben 402 mit einer Manschette oder einem Kolbenring 406 an einem Pleuel 404 eines Kurbeltriebs 350 gehalten. Der als eine Pleuelstange ausgelegte Pleuel 404 selbst ist an einem Exzenterzapfen 342 gelagert.

Der mit dem Elektromotor 300 gebildete Antrieb für den Kurbeltrieb 350 und der Kurbeltrieb 350 sind im Wesentlichen in dem Antriebsgehäuse 126 untergebracht. Der Antrieb selbst weist zur Bildung des Elektromotors 300 einen Stator 304 mit einer Statorwicklung 306 auf. Des Weiteren weist der Antrieb einen Läufer bzw. Außenläufer-Rotor 340 mit einer Rotorglocke 348 und einer daran angebrachten Anordnung von Permanentmagneten 308 auf.

Zur Ausbildung des Motors 300 in Form eines Außenläufermotors für den Antrieb ist der Außenläufer-Rotor 340 getrennt durch einen Luftspalt 312 um den Stator 304 gehalten .Der Stator 304 wird somit vom Außenläufer-Rotor 340 rotierbar um eine Mittenachse M, welche durch entsprechende Anordnung des Stators 304 mit der Symmetrieachse S des Stators 304 zusammenfällt, umgeben. Der Außenläufer-Rotor 340 ist hier gemäß dem Konzept der Erfindung an einer Lageranordnung 320 drehbar in dem Antriebsgehäuse 126, nämlich in einer Innenseite 132 einer Gehäusewand 129 des Antriebsgehäuses 126, gehalten, während der Stator 304 als Teil eines Antriebsgehäusedeckels 130 gebildet ist. Mittels des Antriebsgehäusedeckels 130 kann das Antriebsgehäuse 126 durch Einsetzen des Antriebsgehäusedeckels 130 in eine Stirnöffnung 134 des Antriebsgehäuserumpfes 128 verschlossen werden. Alternativ kann der Stator 304 ebenso über geeignete Befestigungsmittel, insbesondere Schrauben, lösbar am Antriebsgehäusedeckel 130 befestigt sein. Auch ist es möglich, hier nicht dargestellt, dass der Außenläufer-Rotor 340 über die im Elektromotor 300 wirkenden und hier schemenhaft angedeuteten Magnetkräfte MK in axialer Richtung A fixiert wird. Weiterhin ist es gemäß einer Weiterbildung möglich, den Stator 304 relativ zum Außenläufer-Rotor 340 in axialer Richtung A zu verstellen. Dies kann beispielsweise über ein Verstellmittel, beispielsweise eine oder mehrere Gewinde oder eine oder mehrere Passflächen, die eine axiale Verschiebbarkeit von Antriebsgehäusedeckel 130 zu Antriebsgehäuserumpf 128 ermöglichen, erreicht werden. Zusätzlich oder alternativ können auch Stellschrauben zum Verstellen und Fixieren des Antriebsgehäusedeckels bzw. des Stators eingesetzt werden.

Der Außenläufer-Rotor 340 verfügt über keine zentrale Rotorwelle im klassischen Sinne, sondern bildet gemäß dem Konzept der Erfindung mit der Rotorglocke 348 eine selbsttragende, insbesondere einstückige Einheit, an welcher ebenfalls der Exzenterzapfen 342 befestigt ist, welcher insbesondere durch eine einstückige Anformung 341 gebildet wird.

Der Außenläufer-Rotor 340 und der Exzenterzapfen 342 sowie das Pleuel 404 bilden die wesentlichen kraftübertragenden Elemente des durch den Elektromotor 300 angetriebenen Kurbeltriebs 350, wobei das Pleuel 404 mittels eines Pleuellagers 344 drehbewegbar mit dem Exzenterzapfen 342 verbunden ist. Das Pleuellager 344 ist ausgebildet zur Ausführung einer rotierenden Bewegung des Rotors 340 sowie in einer weiteren Ausführung auch einer Hin- und Herbewegung des Pleuels 404. Durch eine rotierende Bewegung des Rotors 340 wird somit das Pleuel 404 und damit verbunden der Kolben 402 in eine hauptsächlich translatorische Hubbewegung zum Antrieb des Kompressors versetzt. Weiterhin kann der Außenläufer-Rotor über ein Ausgleichsgewicht zum Ausgleichen der durch den Exzenterzapfen 342 und daran befestigte Teile hervorgerufenen Unwucht verfügen, welches hier nicht weiter dargestellt ist.

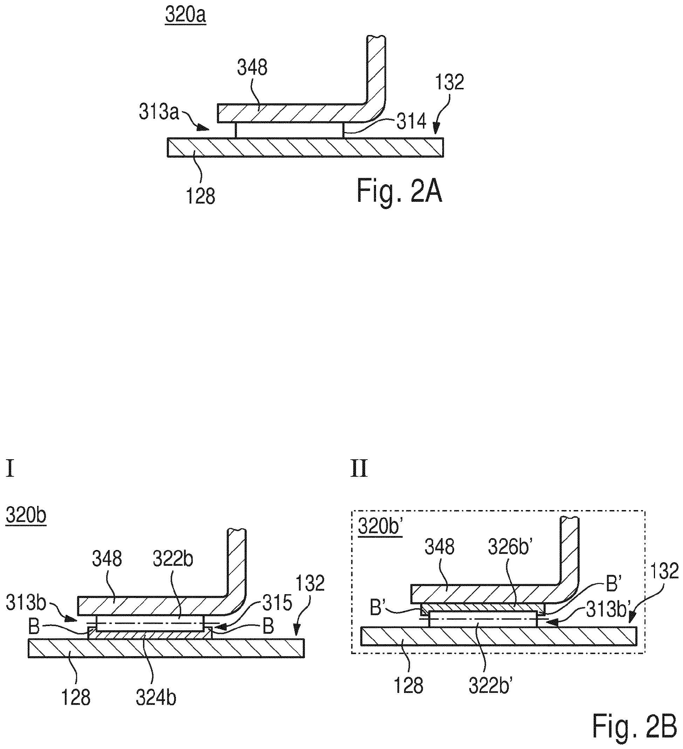

In den Figuren 2A bis 2F sind beispielhaft verschiedene Ausführungsformen der Lagerung 320 des Rotors 340 gemäß dem Konzept der Erfindung, jeweils in einer ausschnittsweisen Schnittdarstellung dargestellt. Der Ausschnitt zeigt jeweils einen Schnitt durch den Lagerring am Übergang zwischen Rotorglocke 348 und Antriebsgehäuserumpf 128.

Fig. 2A zeigt in schemenhafter Weise einen Ausschnitt der Rotorlagerung gemäß dem Konzept der Erfindung. In dieser gezeigten Weiterbildung weist eine Lageranordnung 320a ein Lager 313a in Form eines Gleitlagers 314 auf, welches eine rotierende Relativbewegung zwischen der Rotorglocke 348 des Außenläufer-Rotors 340, bzw. und dem Antriebsgehäuserumpf 128 ermöglicht.

Der Vorteil einer Gleitlagerung liegt in dem geringen konstruktiven Aufwand, mittels dessen die Lagerung realisiert werden kann. Insbesondere kann bei einer Gleitlagerung auf rotierende Wälzkörper verzichtet werden. In der dargestellten Form der Gleitlagerung ist eine axiale Beweglichkeit des Rotors gegeben und wird lediglich durch andere auf den Außenläufer-Rotor 340 wirkende Kräfte, beispielsweise des Stators 304 oder des Pleuels 404, beschränkt. Das Gleitlager kann weiterhin auf verschiedene Weisen konstruktiv realisiert werden, beispielsweise durch eine aus einem verschleißarmen Material gebildete Gleithülse oder in Form eines hydrodynamischen Gleitlagers. Für Letzteres müssten jedoch wiederum konstruktive Maßnahmen zur Abschirmung und Speicherung eines Schmiermittels getroffen werden, welche den konstruktiven Aufwand erhöhen.

Fig. 2B zeigt weiterhin einen Ausschnitt I einer weiteren Ausführungsform der Rotorlagerung. In dieser Weiterbildung weist eine Lageranordnung 320b ein innenringloses Lager 313b in Form eines innenringlosen Nadellagers 315 auf, das heißt, dass das innenringlose Nadellager 315 über keinen Lagerinnenring verfügt, sondern die Wälzkörper 322b in direktem Kontakt mit der Außenoberfläche der Rotorglocke 348 stehen. Ein Außenring 324b des Nadellagers 315 weist weiterhin an seiner linken und rechten Seite jeweils einen Bord B auf, der die Bewegung der Wälzkörper 322b in axialer Richtung beschränkt. Weiterhin ist die Oberfläche der Rotorglocke 348 derartig ausgebildet, dass sie in axialer Richtung relativ zu den Wälzkörpern 322b bewegbar ist, das innenringlose Nadellager 315 also als Loslager gebildet ist. Dies führt, analog zu der in Fig. 2A gezeigten Ausführung, zu einer axialen Beweglichkeit des Rotors 340, welche lediglich durch die bereits beschriebenen, weiteren auf den Außenläufer-Rotor 340 wirkenden Kräfte beschränkt wird. Die in Fig. 2B gezeigte Ausführungsform wirkt sich aufgrund der kompakten Bauweise besonders vorteilhaft auf den erforderlichen Bauraum aus, dies vor allem aufgrund des geringen Wälzkörperdurchmesser und des entfallenden Lagerinnenrings.

Gleichwohl ist es bei einer in einer weiteren Ansicht II gezeigten alternativen Ausführungsform eine Lageranordnung 320b' möglich, mit einem außenringlosen Lager 313b' eine in radialer Richtung umgekehrte Anordnung der hier beschriebenen Lagerelemente vorzusehen. In diesem Falle stehen Wälzkörper 322b' in direktem Kontakt mit der Innenseite 132 des Antriebsgehäuserumpfs 128. Ein Lagerinnenring 326b' weist analog zu dem oben beschriebenen Außenring 324b an seiner linken und rechten Seite jeweils einen Bord B' auf, der die Bewegung der Wälzkörper 322b' in axialer Richtung beschränkt. Somit werden analog die oben beschriebenen Vorteile insbesondere hinsichtlich des Bauraums erreicht.

In beiden Fällen ist es möglich und sogar sinnvoll, die Oberfläche, welche als Lauffläche in direktem Kontakt mit den Wälzkörper 322b, 322b' steht, also die Innenseite 132 des Antriebsgehäuserumpfs 128 oder die Außenoberfläche der Rotorglocke 348, entsprechend zu behandeln, um die tribologischen Eigenschaften zu verbessern. Insbesondere kommt hier ein Härten oder Beschichten der Oberfläche in Frage.

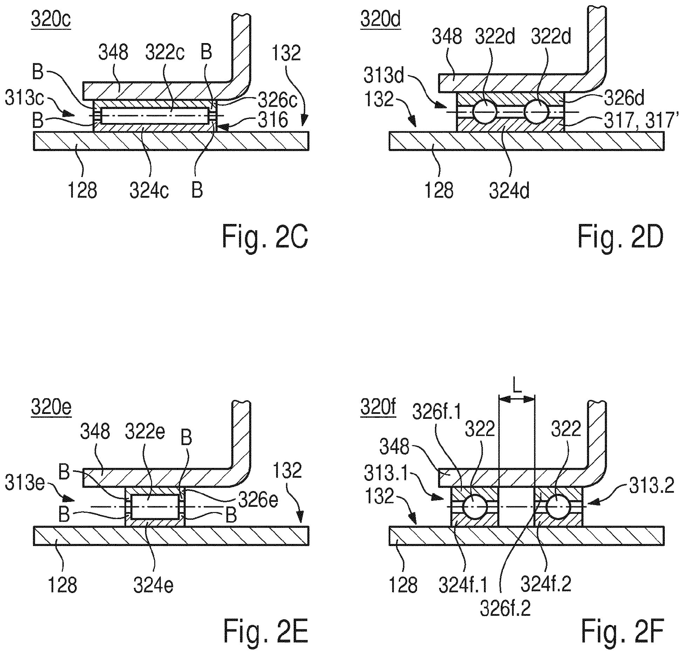

Fig. 2C zeigt einen Ausschnitt einer weiteren bevorzugten Weiterbildung einer Rotorlagerung gemäß dem Konzept der Erfindung. In dieser Weiterbildung ist die Rotorglocke 348 über eine Lageranordnung 320c, welches mit einem Lager 313c in Form eines Nadellagers 316 mit Innenring ausgebildet ist, in dem Antriebsgehäuserumpf 128 drehbar gelagert. In dieser Ausführungsform weist das Lager 316 sowohl einen Lageraußenring 324c als auch einen Lagerinnenring 326c auf. Weiterhin weisen sowohl Lageraußenring 324c als auch Lagerinnenring 326c jeweils an der linken und rechten Seite Borde B auf, welche Bewegungsfreiheit der Wälzkörper 322c in axialer Richtung begrenzen und so die Übertragung von Axialkräften durch die Lageranordnung 320c ermöglichen. Somit ist in dieser Ausführungsform der Außenläufer-Rotor 340 bzw. die Rotorglocke 348 über die Lageranordnung 320c axial im Antriebsgehäuserumpf 128 gehalten. Auf diese Weise können in axialer Richtung wirkende Kräfte, die beispielsweise über das Pleuel in den Außenläufer-Rotor 340 geleitet werden, unabhängig von den durch den Elektromotor 300 wirkenden magnetischen Kräften, von der Lageranordnung 320c aufgenommen und in den Antriebsgehäuserumpf 128 geleitet werden.

Fig. 2D zeigt eine weitere bevorzugte Ausführungsform der Rotorlagerung. In dieser Weiterbildung weist eine Lageranordnung 320d ein Lager 313d in Form eines mehrreihigen Wälzlagers 317 auf, mit einem Lageraußenring 324d und einem Lagerinnenring 326d, welches vorliegend als ein zweireihiges Rillenkugellager 317' gebildet ist. Durch die, verglichen mit einer einreihigen Ausführung, verdoppelte Anzahl an Wälzkörpern 322d ergibt sich eine entsprechende Erhöhung der Tragfähigkeit des Lagers. Insbesondere positiv wirkt sich die zweireihige Bauform auch auf die Vermeidung von Verkippung des Rotors infolge von Momenten, insbesondere Biegemomenten, aus, welche über auf den Außenläufer-Rotor 340 wirkende Pleuelkräfte eingeleitet werden. Weiterhin ist es möglich, anstelle des zweireihigen Rillenkugellagers 317' ein hier nicht dargestelltes, einreihiges Kugellager 317", insbesondere Rillenkugellager, zu verwenden, welches nur eine Reihe von Wälzkörpern 322d aufweist.

Fig. 2E zeigt eine weitere bevorzugte Ausführungsform der Rotorlagerung. In dieser Weiterbildung weist eine Lageranordnung 320e ein Lager 313e in Form eines Zylinderrollenlagers 318 auf. Im Gegensatz zu einem Nadellager 315, 316 weisen die Wälzkörper 322e eines Zylinderrollenlagers 318 einen größeren Durchmesser auf. Trotz der höheren Bauraumanforderungen ist diese Ausführungsform vorteilhaft hinsichtlich zu erreichender Drehzahlen des Rotors 340. Weiterhin weisen auch in dieser Ausführungsform sowohl Lageraußenring 324e als auch Lagerinnenring 326e Borde B auf, welche die axiale Bewegungsfreiheit der Wälzkörper 322e beschränken. Analog zu den in Fig. 2C und Fig. 2D gezeigten Ausführungsformen wird der Außenläufer-Rotor 340 in der Fig. 2E gezeigten Ausführungsform durch die Lageranordnung 320e fixiert. Auch ist es möglich, anstelle eines Zylinderrollenlagers 318 ein hier nicht dargestelltes Tonnenlager 319 zu verwenden, welches anstelle zylinderförmiger Wälzkörper tonnenförmige Wälzkörper aufweist.

Fig. 2F zeigt eine weitere besonders bevorzugte Ausführungsform der Rotorlagerung. In dieser Ausführungsform weist eine Lageranordnung 320f zwei separate, vorliegend als Rillenkugellager 317 ausgebildete Wälzlager 313, nämlich ein pleuelfernes Lager 313.1 und ein pleuelnahes Lager 313.2 auf. Das pleuelferne Lager 313.1 weist einen Lageraußenring 324f.1 und einen Lagerinnenring 326f.1 auf. Das pleuelnahe Lager 313.2 weist einen Lageraußenring 324f.2 und einen Lagerinnenring 326f.1 auf. In dieser Ausführungsform wird der bereits in der in Fig. 2D dargestellten Weiterbildung erzielte Vorteil einer erhöhten Tragfähigkeit der Lagerung, ebenfalls und insbesondere in noch verbesserter Weise erreicht. Die Lager 313.1, 313.2 sind in dieser Weiterbildung als einreihige Rillenkugellager 317 ausgebildet. Durch die Wahl eines größeren, den axialen Abstand beider Lager 313.1, 313.2 beschreibenden Lagerabstandes L, kann weiterhin die Fähigkeit der Lagerung zur Aufnahme von Momenten verbessert werden. Derartige Momente können insbesondere in Form von auf den Exzenterzapfen 342 wirkenden Pleuelkräften in den Außenläufer-Rotor 340 geleitet werden.

Die in den Figuren 2B, 2C, 2D und 2E dargestellten Lagerungstypen, insbesondere die Lageranordnungen 320b, 320c, 320d, 320e, können formschlüssig im Antriebsgehäuse in axialer Richtung befestigt werden. Dies kann insbesondere durch einen Absatz auf der als Lagersitz dienenden Passfläche im Antriebsgehäuserumpf 128 erreicht werden, gegen welchen der Lageraußenring 324, 324b, 324c, 324d, 324e bei Montage des Antriebsgehäusedeckels 130 durch einen geeigneten, ringförmigen Absatz im Antriebsgehäusedeckel 130 gedrückt wird.

Die in den Figuren 2B, 2C, 2D, 2E und 2F dargestellten Lager 313b - e, 313.1, 313.2 in den Lageranordnungen 320b, 320c, 320d, 320e, 320f, sind allesamt spezielle Bauformen eines oder mehrerer Wälzlager. Die einzelnen Lagerungstypen können nach Bedarf und Anwendungsfall variiert werden, so kann beispielsweise statt der in Fig. 2F gezeigten Anordnung von zwei Rillenkugellagern auch zwei Nadel- oder Zylinderrollenlager verwendet werden.

Bei einer in Fig. 2F gezeigten Ausführungsform mit mehrfach angeordneten Lagern kann weiterhin zwischen den Lageraußenringen der einzelnen Lager jeweils eine Distanzhülse zur Fixierung in axialer Richtung verwendet werden.

Alternativ können in dieser Ausführungsform auch Absätze mit verschiedenen Durchmessern sowohl auf Seite des Rotors 340 als auch auf Seite des Antriebsgehäuserumpfes 128 verwendet werden, um die jeweiligen Lageraußenringe 324f.1, 324f.2 und Lagerinnenringe 326f.1, 326f.2 formschlüssig in axialer Richtung zu fixieren. Weiterhin können ebenfalls Lager mit unterschiedlichen Innen- und Außendurchmessern eingesetzt werden, um jeweils an unterschiedlichen zylindrischen Absätzen mit ebenfalls verschiedenen Durchmessern formschlüssig in axialer Richtung befestigt zu werden. Schließlich ist es ebenfalls möglich, die axiale Fixierung der Lageranordnungen 320, 320a - f zu erreichen, indem die Außenoberfläche der Rotorglocke 348 und/oder die Innenoberfläche des Antriebsgehäuserumpfes 128 konisch ausgeführt sind.

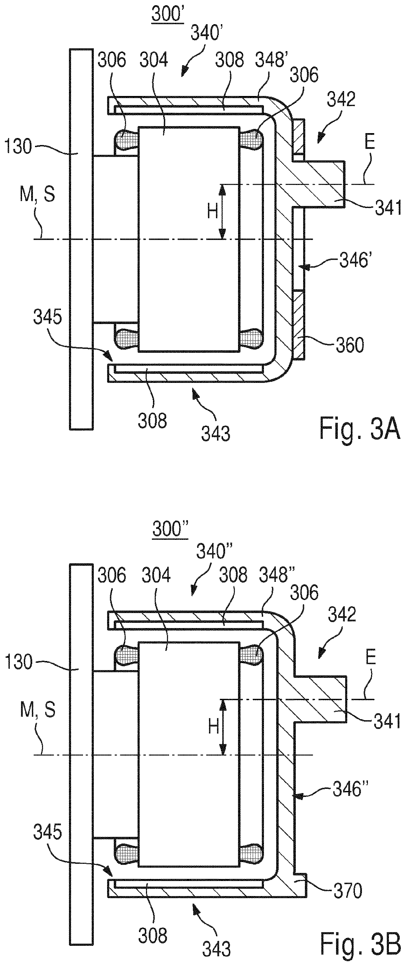

Fig. 3A zeigt in einer schematischen Ansicht einen Elektromotor 300' in einer weiteren bevorzugten Weiterbildung der Erfindung. In dieser Ansicht ist der Stator 304 am Antriebsgehäusedeckel 130 angeordnet. Die Rotorglocke 348' des Außenläufer-Rotors 340' ist derartig ausgebildet und angeordnet, dass sie den Stator 304 radial umfasst und drehbar um die Mittenachse M gelagert ist. Auf die Darstellung von Details, insbesondere der Lager, wurde aus Gründen der Übersicht und Vereinfachung verzichtet. Der Außenläufer-Rotor 340' weist weiterhin am Rotorstirnabschnitt 346' einen Exzenterzapfen 342 in Form einer einstückigen Anformung 341 auf, dessen Exzenterachse E in einem radialen Hubabstand H zur Mittenachse M angeordnet ist.

Weiterhin ist an dem Rotorstirnabschnitt 346' ein Schwungmassengewicht 360 angeordnet, welches in dieser Weiterbildung als ringförmiger, massebehafteter Körper ausgebildet ist, welcher vorliegend praktisch eine Erweiterung der Rotorglocke in axialer Richtung darstellt. Gleichwohl sind selbstverständlich andere Bauformen und Anordnungen eines Schwungmassengewichts 360 möglich, beispielsweise auf dem Außenumfang 343 der Rotorglocke 348' oder am Innenumfang 345, jeweils in ausreichendem axialen Abstand zur Statorwicklung 306, Permanentmagnetanordnung 308 und zu einer hier nicht dargestellten Lageranordnung 320, 320a - f und allgemein wie es der Bauraum der jeweiligen Weiterbildung zulässt. Generell gilt, dass eine Anordnung des Schwungmassengewicht 360 weiter außen am Durchmesser des Rotors das Trägheitsmoment des Außenläufer-Rotors 340 erhöht. Vorliegend ist sichtbar, dass die radiale Ausbreitung des Schwungmassengewichts 360 oberhalb des Exzenterzapfens 342 größer ist als unterhalb des Exzenterzapfens 342. Durch eine variable, in radialer Richtung von einer Ringform abweichende Ausbildung des Schwungmassengewichts 360 kann weiter vorteilhaft ein Massenausgleich zum Minimieren oder Auslöschen von im Betrieb auftretenden Unwuchten erreicht werden.

Die in Fig. 3B gezeigte Weiterbildung eines Elektromotors 300" unterscheidet sich von der in Fig. 3A gezeigten Weiterbildung dadurch, dass sie kein Schwungmassengewicht 360 aufweist, sondern dafür am Rotorstirnabschnitt 346" ein Ausgleichsgewicht 370, welches zum Erreichen eines rotatorischen Massenausgleichs insbesondere in radialer Richtung gegenüber des Exzenterzapfens 342 angeordnet ist. Hierdurch soll insbesondere erreicht werden, dass die die Masse- und Trägheitskräfte des Exzenterzapfens 342 und mit dem Exzenterzapfen 342 verbundenen Komponenten, insbesondere den hier nicht dargestellten Pleuel 404 und Kolben 402, durch das beschleunigte Ausgleichsgewicht 370 ausgeglichen werden. So kann auf konstruktive Weise erreicht werden, dass auftretende Unwuchten minimiert und insbesondere praktisch vollständig ausgelöscht werden können. Vorliegend ist das Ausgleichsgewicht möglichst nah am Außenumfang 343 der Rotorglocke 348" des Außenläufer-Rotors 340" angebracht, da es so zum Erzeugen einer die Unwuchten ausgleichenden Kraft vorteilhaft kleiner ausfallen kann, insbesondere verglichen mit einer Anbringung näher an der Symmetrieachse S des Stators bzw. des Rotors.

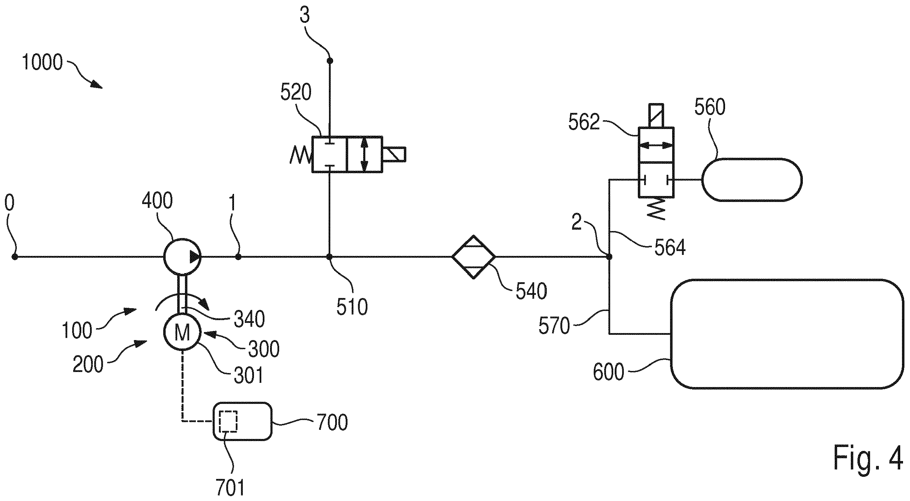

Fig. 4 zeigt eine stark vereinfachte, schematische Übersicht einer Druckluftversorgungsanlage 1000 mit einer Verdichteranordnung 100 gemäß dem Konzept der Erfindung zur Versorgung einer Pneumatikanlage 600. Die Druckluftversorgungsanlage 1000 weist eine Luftansaugung 0 zum Ansaugen von Frischluft auf, die weiterhin mit einem Einlass des Verdichters 400 fluidführend, insbesondere gasführend, verbunden ist. Der Verdichter 400 wird als Teil der Verdichteranordnung 100 von einem Antrieb 200 mit einem Elektromotor 300, der vorliegend als bürstenloser Gleichstrom-Motor 301 ausgebildet ist und von einer Ansteuerschaltung 700 mit einer Leistungselektronik 701 angesteuert wird, über einen Außenläufer-Rotor 340 gemäß dem Konzept der Erfindung angetrieben. Die verdichtete Frischluft wird weiterhin über eine Druckluftquelle 1 bereitgestellt, an welche sich eine Abzweigung 510 anschließt. An diese Abzweigung 510 ist zum einen, über ein Entlüftungsventil 520, eine Entlüftung 3 angeschlossen. Zum anderen ist an die Abzweigung 510 ein Lufttrockner 540 angeschlossen, der weiterhin zu einem Druckluftanschluss 2 führt. An diesen sind weiterhin über eine Speicherleitung 564und ein Speicherventil 562 ein Druckluftspeicher 560 sowie weiterhin über eine Galerie 570 die Pneumatikanlage 600 angeschlossen. Die Pneumatikanlage 600 kann beispielsweise eine Luftfederanlage, oder eine weitere pneumatische Anlage, insbesondere eines Fahrzeugs, sein. Weiterhin sind einzelne Ventile, Drosseln und dergleichen Stellmittel sowie einzelne Komponenten, insbesondere der Pneumatikanlage, in dieser Darstellung aus Gründen der Übersicht und Vereinfachung nicht dargestellt.

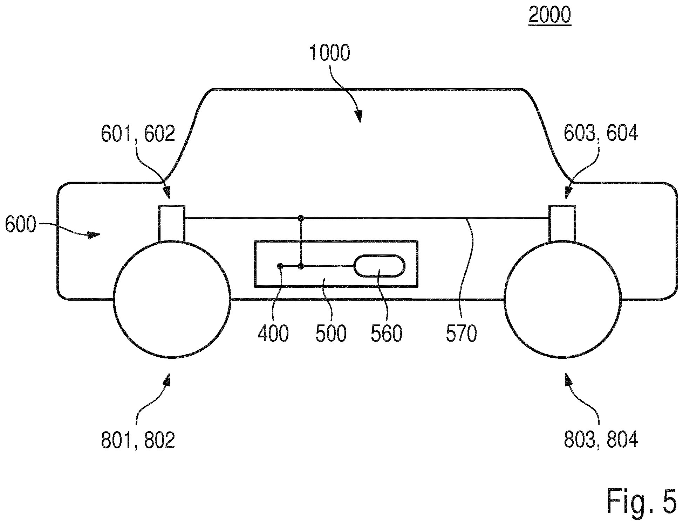

Fig. 5 zeigt eine schematische Darstellung eines Fahrzeugs 2000 -vorliegend in Form eines PKW-- mit einer Druckluftversorgungsanlage 1000 und einer Pneumatikanlage 600. Bei Fahrzeugen im PKW-Bereich ist ein geräusch- und vibrationsarmer Betrieb von großer Bedeutung, da hier, im Unterschied zu Anwendungen im LKW-Bereich, die Akustikanforderungen höher bzw. sensibler sind. Das hier deswegen, ohne Einschränkung der Anwendbarkeit auch für LKWs oder andere Nutzfahrzeuge, beispielhaft dargestellte PKW-Fahrzeug 2000 verfügt über vier Räder 801, 802, 803 und 804, von denen hier aufgrund der Schnittdarstellung die zwei jeweils vorderen Räder gezeigt sind. Analog zur Anzahl der Räder verfügt die Pneumatikanlage 600 über vier Luftfedern 601, 602, 603 und 604, von denen hier analog zu den Rädern aufgrund der Schnittdarstellung die zwei jeweils vorderen Luftfedern gezeigt sind. Die Luftfedern 601, 602, 603 und 604, die jeweils den Rädern 801, 802, 803 und 804 zugeordnet sind, werden als Teil der Pneumatikanlage 600 von der Druckluftversorgungsanlage 1000 mit Druckluft versorgt. Die Druckluftversorgungsanlage 1000 ist über die Galerie 570 mit den Komponenten der Pneumatikanlage 600, in diesem Falle den hier dargestellten Luftfedern 601, 602, 603 und 604, fluidführend verbunden.

Die Druckluftversorgungsanlage 1000 ist in dieser Darstellung stark vereinfacht zeigt, so dass lediglich der Druckluftspeicher 560 und der Verdichter 400 gemäß dem Konzept der Erfindung sichtbar ist.

Der Verdichter 400 gemäß dem Konzept der Erfindung könnt allerdings in einer hier nicht gezeigten Abwandlung zusätzlich oder alternativ unabhängig von der Druckluftversorgungsanlage eingesetzt werden.

Das Konzept bietet vorzugsweise die Basis für eine in verbesserter Weise funktionierende, insbesondere kompakte sowie vibrations- und geräuscharme Verdichteranordnung. Weiterhin führen eine Reduzierung von Kräften und/oder Momenten sowie insbesondere eine Reduzierung der mit den Kräften und/oder Momenten verbundenen dynamischen Belastungen und Vibrationen, zu einer schonenderen Betriebsweise, welche sich positiv auf Effizienz und Langlebigkeit der Verdichteranordnung auswirken.

### Bezugszeichenliste (Bestandteil der Beschreibung)

- 0: Luftansaugung
- 1: Druckluftquelle
- 2: Druckluftanschluss
- 3: Entlüftung
- 100: Verdichteranordnung
- 120: Gehäuse
- 122: Trockner- und Ventilgehäuse
- 124: Kompressorgehäuse
- 126: Antriebsgehäuse
- 128: Antriebsgehäuserumpf
- 129: Gehäusewand
- 130: Antriebsgehäusedeckel
- 132: Innenseite der Gehäusewand
- 134: Stirnöffnung des Antriebsgehäuserumpfes
- 140: Lufttrockner
- 142: Ventilanordnung
- 200: Antrieb
- 220: Kurbelgehäuse
- 222: Motorgehäuse
- 300, 300', 300": Elektromotor
- 301: Bürstenloser Gleichstrom-Motor
- 304: Stator
- 306: Statorwicklung
- 308: Permanentmagnetanordnung
- 312: Luftspalt
- 313, 313a - e, 313.1, 313.2: Lager
- 314: Gleitlager
- 315: Innenringloses Nadellager
- 316: Nadellager, Nadellager mit Innenring
- 317: Mehrreihiges Lager
- 317': Zweireihiges Rillenkugellager
- 318: Zylinderrollenlager
- 320, 320a - f: Lageranordnung
- 322, 322b - f: Wälzkörper
- 324, 324b - e, 324f.1, 324f.2: Lageraußenring
- 326, 326b' 326c - e, 326f.1, 326f.2: Lagerinnenring
- 330: Pleuelfernes Lager
- 332: Pleuelnahes Lager
- 340, 340', 340": Außenläufer-Rotor
- 341: Anformung, einstückige Anformung
- 342: Exzenterzapfen
- 343: Außenumfang des Außenläufer-Rotors
- 344: Pleuellager
- 345: Innenumfang des Außenläufer-Rotors
- 346, 346', 346": Rotorstirnabschnitt
- 348, 348', 348": Rotorglocke
- 350: Kurbeltrieb
- 360: Schwungmassengewicht
- 370: Ausgleichsgewicht
- 400: Kompressor, Verdichter
- 402: Kolben
- 404: Pleuel
- 406: Manschette, Kolbenring
- 510: Abzweigung
- 520: Entlüftungsventil
- 540: Lufttrockner
- 560: Druckluftspeicher
- 562: Speicherventil
- 564: Speicherleitung
- 600: Pneumatikanlage
- 601, 602, 603, 604: Luftfeder
- 700: Ansteuerschaltung
- 701: Leistungselektronik
- 800: Fahrzeug
- 801, 802, 803, 804: Rad
- 1000: Druckluftversorgungsanlage
- 2000: Fahrzeug
- A: Axiale Richtung
- B, B': Bord
- E: Exzenterachse
- H: Hubabstand
- L: Lagerabstand
- M: Mittenachse, axiale Richtung
- MK: Magnetkraft
- S: Symmetrieachse des Stators

## Patentansprüche

1. Verdichteranordnung (100) zum Betreiben einer Druckluftversorgungsanlage (1000), aufweisend:
- einen Elektromotor (300, 300', 300"), der innerhalb eines Antriebsgehäuses (126) angeordnet ist und einen innenliegenden Stator (304) und einen außenliegenden Außenläufer-Rotor (340, 340', 340") aufweist, wobei der Außenläufer-Rotor (340, 340', 340") um den innenliegenden Stator (304) rotierbar angeordnet ist, und
- einen pneumatischen Kompressor (400), und wobei
- der Außenläufer-Rotor (340, 340', 340") über eine Lageranordnung (320, 320a - f), die mindestens ein Lager (313, 313a - e, 313.1, 313.2) aufweist, um eine Mittenachse (M) rotierbar in Bezug auf das Antriebsgehäuse (126) gelagert ist, **dadurch gekennzeichnet, dass**
- der Außenläufer-Rotor (340, 340', 340"), insbesondere ausschließlich, durch die Lageranordnung (320, 320a - f) am Außenumfang (343) des Außenläufer-Rotors (340, 340', 340") gelagert ist.

2. Verdichteranordnung (100) nach Anspruch 1, **dadurch gekennzeichnet, dass** der Außenläufer-Rotor (340, 340', 340") ein Schwungmassengewicht (360) aufweist.

3. Verdichteranordnung (100) nach Anspruch 1 oder 2, **dadurch gekennzeichnet, dass** der Außenläufer-Rotor (340, 340', 340") einen praktisch zylindrischen, um eine Exzenterachse (E) angeordneten Exzenterzapfen (342) aufweist, wobei die Exzenterachse (E) parallel und in einem Hubabstand (H) zur Mittenachse (M) angeordnet ist.

4. Verdichteranordnung (100) nach Anspruch 3, **dadurch gekennzeichnet, dass** der Exzenterzapfen (342) in Form einer, insbesondere einstückigen, Anformung (341) an einen Rotorstirnabschnitt (346, 346', 346") zur Aufnahme eines Pleuels (404) über ein Pleuellager (344) gebildet ist.

5. Verdichteranordnung (100) nach einem der Ansprüche 1 bis 3, **dadurch gekennzeichnet, dass** das Antriebsgehäuse (126) einen Antriebsgehäuserumpf (128) und einen Antriebsgehäusedeckel (130) aufweist, wobei
- der Stator (304) am Antriebsgehäusedeckel (130) gehalten ist, und
- der Außenläufer-Rotor (340, 340', 340") an einer Innenseite (132) einer Gehäusewand (129) des Antriebsgehäuserumpfes (128) gelagert ist.

6. Verdichteranordnung (100) nach Anspruch 5, **dadurch gekennzeichnet, dass** der Antriebsgehäuserumpf (128) ein Motorgehäuse (222) und ein Kurbelgehäuse (220) des Kompressors (400) ausbildet, wobei der Antriebsgehäusedeckel (130) stirnseitig abschließend auf einer Stirnöffnung (134) des Antriebsgehäuserumpfes (128) aufsitzt.

7. Verdichteranordnung (100) nach Anspruch 1 bis 6, **dadurch gekennzeichnet, dass** der Stator (304) derart angeordnet ist, dass die Symmetrieachse (S) des Stators (304) koaxial mit der Mittenachse (M) ausgerichtet ist, insbesondere die Symmetrieachse (S) des Stators (304) auf der Mittenachse (M) liegt, wobei der die Mittenachse (M) umgebende Bereich des Stators (304), insbesondere ein Blechpaket des Stators (304), materialfüllend ausgebildet ist oder zumindest teilweise hohl und frei von einer Rotorwelle ist.

8. Verdichteranordnung (100) nach Anspruch 1 bis 7, **dadurch gekennzeichnet, dass** die Lageranordnung (320b, 320') ein innenringloses Lager (313b) und/oder ein außenringloses Lager (313b') aufweist.

9. Verdichteranordnung (100) nach Anspruch 1 bis 8, **dadurch gekennzeichnet, dass** der Elektromotor (300, 300', 300") als elektronisch kommutierter, bürstenloser Gleichstrom-Motor (301) mit einer Ansteuerschaltung (700) umfassend eine Leistungselektronik gebildet ist.

10. Verdichteranordnung (100) nach einem der Ansprüche 1 bis 9, **dadurch gekennzeichnet, dass** das Lager (313, 313a - e, 313.1, 313.2) ausgewählt ist aus einer Gruppe von Lagern bestehend aus: Gleitlager (314), Nadellager (315, 316), Kugellager (317"), Tonnenlager (319) und Zylinderrollenlager (318).

11. Verdichteranordnung (100) nach einem der Ansprüche 1 bis 10, **dadurch gekennzeichnet, dass** die Lageranordnung (320, 320a - f) mindestens ein einreihiges Lager (313a, 313b, 313c, 313e, 313.1, 313.2) oder mindestens ein mehrreihiges Lager (313d) aufweist.

12. Verdichteranordnung (100) nach einem der Ansprüche 1 bis 11, **dadurch gekennzeichnet, dass** der Außenläufer-Rotor (340, 340', 340") ausgebildet ist, um über die im Elektromotor (300, 300', 300") wirkenden Magnetkräfte (MK) in axialer Richtung (A) fixiert zu werden.

13. Verdichteranordnung (100) nach einem der Ansprüche 1 bis 12, **dadurch gekennzeichnet, dass** der Außenläufer-Rotor (340, 340', 340") über ein Lager (313, 313a - e, 313.1, 313.2) in axialer Richtung (A) fixiert wird.

14. Verdichteranordnung (100) nach einem der Ansprüche 1 bis 13, **dadurch gekennzeichnet, dass** am Außenumfang (343) des Außenläufer-Rotors (340, 340', 340"), insbesondere am Außenumfang (343) der Rotorglocke (348, 348', 348"), mindestens ein Gewicht (360, 370), insbesondere ein Schwungmassengewicht (360) und/oder ein Ausgleichsgewicht (370) zur Kompensation von Unwucht angeordnet ist.

15. Verdichteranordnung (100) nach einem der Ansprüche 1 bis 14, **dadurch gekennzeichnet, dass** der Außenläufer-Rotor (340, 340', 340") über ein pleuelfernes Lager (313.1) und ein pleuelnahes Lager (313.2) rotierbar an dem Antriebsgehäuse (126) gelagert ist, die mit einem Abstand (L) in axialer Richtung (A) angeordnet sind.

16. Verdichteranordnung (100) nach einem der Ansprüche 1 bis 15, **dadurch gekennzeichnet, dass** der Stator (304) in axialer Richtung (A) verstellbar auf dem Antriebsgehäusedeckel (130) angeordnet ist.

17. Druckluftversorgungsanlage (1000) mit einer Verdichteranordnung (100) nach einem der Ansprüche 1 bis 16, aufweisend:
- eine Verdichteranordnung (100) nach einem der Ansprüche 1 bis 16,
- einen Lufttrockner (140) und
- eine Ventilanordnung (142).

18. Fahrzeug (2000), insbesondere PKW, mit einer Pneumatikanlage (600), insbesondere Luftfederanlage (601, 602, 603, 604) und einer Druckluftversorgungsanlage (1000) gemäß Anspruch 17 zum Betreiben der Pneumatikanlage (600).

## Claims

1. A compressor arrangement (100) for operating a compressed air supply installation (1000), the compressor arrangement comprising:
- an electric motor (300, 300', 300"), which is arranged inside a drive housing (126), the electric motor having an internal stator (304) and an external outer rotor (340, 340', 340"), wherein the external outer rotor (340, 340', 340") is arranged in a rotatable manner about the internal stator (304), and
- a pneumatic compressor (400), and wherein
- the external outer rotor (340, 340', 340") is supported in a rotatable manner about a center axis (M) with respect to the drive housing (126) via a bearing arrangement (320, 320a-f), the bearing arrangement having at least one bearing (313, 313a-e, 313.1, 313.2),
**characterized in that**
- the external outer rotor (340, 340', 340") is supported, in particular exclusively, by the bearing arrangement (320, 320a -f) on an outer circumference (343) of the outer rotor (340, 340', 340").

2. The compressor arrangement (100) according to claim 1, **characterized in that** the outer rotor (340, 340', 340") has a flywheel mass weight (360).

3. The compressor arrangement (100) according to claim 1 or 2, **characterized in that** the outer rotor (340, 340', 340") has a practically cylindrical eccentric journal (342) which is arranged about an eccentric axis (E), wherein the eccentric axis (E) is arranged parallel and with a lifting spacing (H) relative to the center axis (M).

4. The compressor arrangement (100) according to claim 3, **characterized in that** the eccentric journal (342) is formed in the form of a formation (341), in particular a one-piece formation, on a rotor end portion (346, 346', 346") in order to receive a connecting rod (404) via a connecting rod bearing (344) .

5. The compressor arrangement (100) according to any of claims 1 to 3, **characterized in that** the drive housing (126) has a drive housing body (128) and a drive housing cover (130), wherein
- the stator (304) is retained on the drive housing cover (130), and
- the outer rotor (340, 340', 340") is supported at an inner side (132) of a housing wall (129) of the drive housing body (128).

6. The compressor arrangement (100) according to claim 5, **characterized in that** the drive housing body (128) forms a motor housing (222) and a crankcase (220) of the compressor (400), wherein the drive housing cover (130) is positioned on a front opening (134) of the drive housing body (128) in a closing manner at the front side.

7. The compressor arrangement (100) according to claim 1 to 6, **characterized in that** the stator (304) is arranged such that an axis of symmetry (S) of the stator (304) is orientated coaxially with the center axis (M), in particular the axis of symmetry (S) of the stator (304) lying on the center axis (M), wherein a region of the stator (304) surrounding the center axis (M), in particular a stack of sheets of the stator (304), is constructed in a materially filling manner or is at least partially hollow and free from a rotor shaft.

8. The compressor arrangement (100) according to claim 1 to 7, **characterized in that** the bearing arrangement (320b, 320') has a bearing (313b) without an inner ring and/or a bearing (313b') without an outer ring.

9. The compressor arrangement (100) according to claim 1 to 8, **characterized in that** the electric motor (300, 300', 300") is an electronically commutated, brushless direct-current motor (301) having a control circuit (700) comprising an electronic power unit.

10. The compressor arrangement (100) according to any of claims 1 to 9, **characterized in that** the bearing (313, 313a - e, 313.1, 313.2) is a bearing selected from the group consisting of a sliding bearing (314), a needle bearing (315, 316), a ball bearing (317"), a spherical roller bearing (319), and a cylindrical roller bearing (318).

11. The compressor arrangement (100) according to any of claims 1 to 10, **characterized in that** the bearing arrangement (320, 320a - f) has at least one single-rowed bearing (313a, 313b, 313c, 313e, 313.1, 313.2) or at least one multi-rowed bearing (313d).

12. The compressor arrangement (100) according to any of claims 1 to 11, **characterized in that** the outer rotor (340, 340', 340") is constructed in order to be fixed by magnetic forces (MK) acting in the electric motor (300, 300', 300") in an axial direction (A).

13. The compressor arrangement (100) according to any of claims 1 to 12, **characterized in that** the outer rotor (340, 340', 340") is fixed via a bearing (313, 313a - e, 313.1, 313.2) in an axial direction (A).

14. The compressor arrangement (100) according to any of claims 1 to 13, **characterized in that** at least one weight (360, 370), in particular a flywheel mass weight (360) and/or a balance weight (370) for compensation of imbalance, is arranged on the external circumference (343) of the outer rotor (340, 340', 340"), in particular on the external circumference (343) of the rotor bell (348, 348', 348").

15. The compressor arrangement (100) according to any of claims 1 to 14, **characterized in that** the outer rotor (340, 340', 340") is rotatably supported on the drive housing (126) via a bearing (313.1) remote from the connecting rod and a bearing (313.2) near the connecting rod, which are arranged with a spacing (L) in an axial direction (A).

16. The compressor arrangement (100) according to any of claims 1 to 15, **characterized in that** the stator (304) is arranged in an axial direction (A) so as to be adjustable on the drive housing cover (130).

17. A compressed air supply installation (1000), having a compressor arrangement (100) according to any of claims 1 to 16, comprising:
- a compressor arrangement (100) according to any of claims 1 to 16,
- an air dryer (140) and
- a valve arrangement (142).

18. A vehicle (2000), in particular an automobile, comprising: a pneumatic installation (600), in particular an air suspension system (601, 602, 603, 604) and a compressed air supply installation (1000) according to claim 17 configured to operate the pneumatic installation (600).

## Revendications

1. Ensemble compresseur (100) pour faire fonctionner une installation d'alimentation en air comprimé (1000), présentant :
- un moteur électrique (300, 300', 300"), qui est disposé à l'intérieur d'un carter d'entraînement (126) et présente un stator (304) situé à l'intérieur et un rotor à induit extérieur (340, 340', 340") situé à l'extérieur, dans lequel le rotor à induit extérieur (340, 340', 340") est disposé de manière à pouvoir tourner autour du stator (304) situé à l'intérieur, et
- un compresseur pneumatique (400), et dans lequel
- le rotor à induit extérieur (340, 340', 340") est monté par rapport au carter d'entraînement (126) de manière à pouvoir tourner autour d'un axe médian (M) par l'intermédiaire d'un ensemble de palier (320, 320a-f), qui présente au moins un palier (313, 313a-e, 313.1, 313.2),
**caractérisé en ce que**
- le rotor à induit extérieur (340, 340', 340") est monté, en particulier exclusivement, par l'ensemble de palier (320, 320a-f) sur la périphérie extérieure (343) du rotor à induit extérieur (340, 340', 340").

2. Ensemble compresseur (100) selon la revendication 1, **caractérisé en ce que** le rotor à induit extérieur (340, 340', 340") présente un poids à masse oscillante (360).

3. Ensemble compresseur (100) selon la revendication 1 ou 2, **caractérisé en ce que** le rotor à induit extérieur (340, 340', 340") présente un tourillon excentrique (342) pratiquement cylindrique, disposé autour d'un axe excentrique (E), dans lequel l'axe excentrique (E) est disposé parallèlement et à une distance de levage (H) par rapport à l'axe médian (M).

4. Ensemble compresseur (100) selon la revendication 3, **caractérisé en ce que** le tourillon excentrique (342) est formé sous forme d'une partie façonnée (341), en particulier d'une seule pièce, sur une partie frontale de rotor (346, 346', 346") pour la réception d'une bielle (404) par l'intermédiaire d'un coussinet de bielle (344).

5. Ensemble compresseur (100) selon l'une quelconque des revendications 1 à 3, **caractérisé en ce que** le carter d'entraînement (126) présente un corps de carter d'entraînement (128) et un couvercle de carter d'entraînement (130), dans lequel
- le stator (304) est retenu sur le couvercle de carter d'entraînement (130), et
- le rotor à induit extérieur (340, 340', 340") est monté sur une face intérieure (132) d'une paroi de carter (129) du corps de carter d'entraînement (128).

6. Ensemble compresseur (100) selon la revendication 5, **caractérisé en ce que** le corps de carter d'entraînement (128) réalise un carter de moteur (222) et un carter de vilebrequin (220) du compresseur (400), dans lequel le couvercle de carter d'entraînement (130) repose frontalement sur une ouverture frontale (134) du corps de carter d'entraînement (128) de manière à la fermer.

7. Ensemble compresseur (100) selon la revendication 1 à 6, **caractérisé en ce que** le stator (304) est disposé de telle sorte que l'axe de symétrie (S) du stator (304) est orienté de manière coaxiale avec l'axe médian (M), en particulier l'axe de symétrie (S) du stator (304) se situe sur l'axe médian (M), dans lequel la zone du stator (304) entourant l'axe médian (M), en particulier un paquet de tôles du stator (304), est réalisée avec remplissage de matériau ou est au moins en partie creuse et exempte d'un arbre de rotor.

8. Ensemble compresseur (100) selon la revendication 1 à 7, **caractérisé en ce que** l'ensemble de palier (320b, 320') présente un palier exempt de bague intérieure (313b) et/ou un palier exempt de bague extérieure (313b').

9. Ensemble compresseur (100) selon la revendication 1 à 8, **caractérisé en ce que** le moteur électrique (300, 300', 300") est formé comme un moteur à courant continu (301) sans balais, à commutation électronique avec un circuit de commande (700) comprenant une électronique de puissance.

10. Ensemble compresseur (100) selon l'une quelconque des revendications 1 à 9, **caractérisé en ce que** le palier (313, 313a-e, 313.1, 313.2) est choisi dans un groupe de paliers constitué de : paliers lisses (314), roulements à aiguilles (315, 316), roulements à billes (317"), roulements à rouleaux sphériques à une seule rangée (319) et roulements à rouleaux cylindriques (318).

11. Ensemble compresseur (100) selon l'une quelconque des revendications 1 à 10, **caractérisé en ce que** l'ensemble de palier (320, 320a-f) présente au moins un palier à une rangée (313a, 313b, 313c, 313e, 313.1, 313.2) ou au moins un palier à plusieurs rangées (313d).

12. Ensemble compresseur (100) selon l'une quelconque des revendications 1 à 11, **caractérisé en ce que** le rotor à induit extérieur (340, 340', 340") est réalisé afin d'être fixé dans la direction axiale (A) par l'intermédiaire des forces magnétiques (MK) agissant dans le moteur électrique (300, 300', 300").

13. Ensemble compresseur (100) selon l'une quelconque des revendications 1 à 12, **caractérisé en ce que** le rotor à induit extérieur (340, 340', 340") est fixé dans la direction axiale (A) par l'intermédiaire d'un palier (313, 313a-e, 313.1, 313.2) .

14. Ensemble compresseur (100) selon l'une quelconque des revendications 1 à 13, **caractérisé en ce qu'**au moins un poids (360, 370), en particulier un poids à masse oscillante (360) et/ou un contrepoids (370) pour la compensation d'un déséquilibre, est disposé sur la périphérie extérieure (343) du rotor à induit extérieur (340, 340', 340"), en particulier sur la périphérie extérieure (343) de la cloche de rotor (348, 348', 348").

15. Ensemble compresseur (100) selon l'une quelconque des revendications 1 à 14, **caractérisé en ce que** le rotor à induit extérieur (340, 340', 340") est monté sur le carter d'entraînement (126) de manière rotative par l'intermédiaire d'un palier éloigné de la bielle (313.1) et d'un palier proche de la bielle (313.2), qui sont disposés à une distance (L) dans la direction axiale (A).

16. Ensemble compresseur (100) selon l'une quelconque des revendications 1 à 15, **caractérisé en ce que** le stator (304) est disposé sur le couvercle de carter d'entraînement (130) de manière à pouvoir se déplacer dans la direction axiale (A).

17. Installation d'alimentation en air comprimé (1000) avec un ensemble compresseur (100) selon l'une quelconque des revendications 1 à 16, présentant :
- un ensemble compresseur (100) selon l'une quelconque des revendications 1 à 16,
- un sécheur à air (140) et
- un ensemble soupape (142).

18. Véhicule (2000), en particulier voiture particulière, avec une installation pneumatique (600), en particulier installation de suspension pneumatique (601, 602, 603, 604) et une installation d'alimentation en air comprimé (1000) selon la revendication 17 pour faire fonctionner l'installation pneumatique (600).
